# EUROPEAN PATENT APPLICATION

(11) **EP 2 445 294 A1**
(43) Date of publication of application: **25.04.2012**
(21) Application number: 10788949.5
(22) Date of filing: 18.06.2010
(51) Int. Cl.: H04W 72/12, H04W 28/18

(54) **METHOD AND NETWORK DEVICE FOR ADJUSTING TRANSMISSION TIMING INTERVAL**

(30) Priority: 19.06.2009 CN 200910108252
(71) Applicant: Huawei Technologies Co., Ltd., Shenzhen, Guangdong 518129 (CN)
(72) Inventor: YU, Jiang, Shenzhen Guangdong 518129 (CN); GUO, Fangfu, Shenzhen Guangdong 518129 (CN)
(74) Representative: Barth, Stephan Manuel
(86) International application number: PCT/CN2010/074032
(87) International publication number: WO 2010/145553

(57) **Abstract**

A transmission timing interval (TTI) adjusting method is provided according to the embodiments of the present invention, which includes: obtaining use condition of a system resource; judging whether a user meets a TTI adjusting requirement according to a current TTI of the user and the obtained use condition of the system resource; and performing TTI adjustment on all or a part of the users meeting the TTI adjusting requirement. A network device is further provided according to the embodiments of the present invention. Through the method and the device provided according to the embodiments of the present invention, a dynamic balance is achieved between the Quality of Service (QoS) of the user and the cell capacity.

## Description

This application claims priority to Chinese Patent Application No. 200910108252.5, filed with the Chinese Patent Office on June 19, 2009 and entitled "TRANSMISSION TIMING INTERVAL ADJUSTING METHOD AND NETWORK DEVICE", which is incorporated herein by reference in its entirety.

### FIELD OF THE INVENTION

The present invention relates to the field of mobile communications technologies, and in particular, to a technology for adjusting a transmission timing interval of a high speed uplink packet access channel.

### BACKGROUND OF THE INVENTION

The R6 version of the 3rd Generation Partnership Project (3rd Generation Partnership Project, the abbreviation is 3GPP) introduces high speed uplink packet access channel (High Speed Uplink Packet Access Channel, the abbreviation is HSUPA), which may achieve high-speed uplink data transmission. One of the main features thereof is that, an air interface adopts a short frame with 10ms or 2ms transmission timing interval (Transmission Timing Interval, the abbreviation is TTI). When a service is borne on an HSUPA channel, a higher uplink peak rate may be provided in the case that the TTI of the HSUPA channel is configured to 2 ms than in the case that the TTI of the HSUPA channel is configured to 10 ms.

In an existing scheme, when a service is borne on an HSUPA channel, the HSUPA channel is configured with a fixed TTI, which will not change after configuration. That is, the TTI is either 2 ms or 10 ms all the time. However, the fixed TTI configured for the HSUPA channel may result in the waste of channel resources of a base station or affect the quality of service QoS of the service.

### SUMMARY OF THE INVENTION

Embodiments of the present invention provide a TTI adjusting method and a network device, so that a dynamic balance is achieved between the QoS of the user and the cell capacity.

An embodiment of the present invention provides a TTI adjusting method, which includes:
obtaining use condition of a system resource;
judging whether a user meets a TTI adjusting requirement according to a current TTI of the user and the obtained use condition of the system resource; and
performing TTI adjustment on all or a part of the users meeting the TTI adjusting requirement.

An embodiment of the present invention further provides a network device, which includes:
a resource obtaining unit, configured to obtain use condition of a system resource;
a judging unit, configured to judge whether a user meets a TTI adjusting requirement according to a current TTI of the user and the use condition of the system resource obtained by the resource obtaining unit; and
an adjusting unit, configured to perform TTI adjustment on the users meeting the TTI adjusting requirement at least according to a result of the judging unit.

Through the TTI adjusting method and the network device provided by the embodiments of the present invention, a TTI adjusting manner is determined according to the current use condition of the system resource and the current TTI of the user, so that a dynamic balance is achieved between the QoS of the user and the cell capacity.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only about some embodiments of the present invention, and persons of ordinary skill in the art can derive other drawings from the accompanying drawings without creative efforts.
FIG. 1 is a flow chart of a TTI adjusting method according to an embodiment of the present invention;
FIG. 2 is a flow chart of a TTI adjusting method according to another embodiment of the present invention;
FIG. 3 is a flow chart of a TTI adjusting method according to still another embodiment of the present invention;
FIG. 4 is a schematic structural diagram of a network device according to an embodiment of the present invention;
FIG. 5 is a schematic structural diagram of a network device according to an embodiment of the present invention; and
FIG. 6 is a schematic structural diagram of a network device according to another embodiment of the present invention.

### DETAILED DESCRIPTION OF THE EMBODIMENTS

The technical solutions in the embodiments of the present invention will be clearly and fully described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

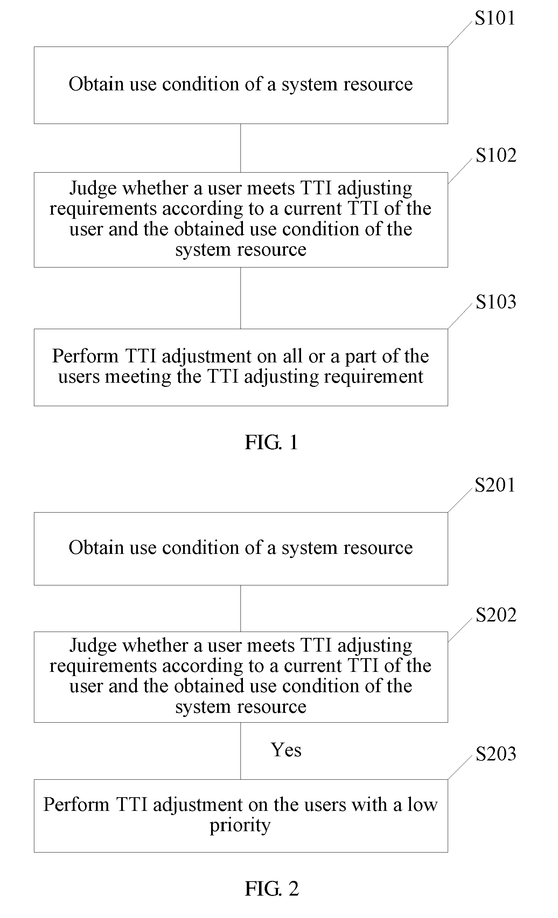

An embodiment of the present invention provides a TTI adjusting method, and as shown in FIG. 1, the method mainly includes the following steps.

S101: Obtain use condition of a system resource.

The system resource may include at least one of the following resources: an air interface load resource, a channel element (Channel Element, the abbreviation is CE) resource, and an Iub resource.

The use condition of the system resource may be a utilization ratio or load condition of any one or more types of the resources described above, as long as the use condition of the system resource can be indicated, which is not limited in the specific implementation of the embodiments of the present invention.

S102: Judge whether a user meets TTI an adjusting requirement according to a current TTI of the user and the obtained use condition of the system resource.

Specifically, it may be judged whether a current system resource is limited according to the obtained use condition of the resource, for example, when any one or more types of the air interface load resource, the CE resource and the Iub resource are limited, it may be determined that the current system resource is limited; or when another user needs to use system resource, while the system fails to provide the resource, it is considered that the current system resource is limited.

A utilization ratio of a certain resource may be compared with a preset utilization ratio threshold, and when the utilization ratio of the certain resource is greater than or equal to the preset threshold, it is considered that the certain resource is limited. The utilization ratio of the resource may be obtained through the following manner: the utilization ratio of the resource=the currently used resource/the overall available resource. It should be noted that, for different resources, the preset utilization ratio threshold may be the same or different.

Alternatively, a current load of a certain resource may be compared with a preset load threshold, and when the load of the certain resource is greater than or equal to the preset threshold, it is considered that the certain resource is limited. It should be noted that, for different resources, the preset load threshold may be the same or different.

The specific values of the utilization ratio threshold and the load threshold may be set according to an actual requirement.

When the current system resource is limited, if the current TTI of the user is a smaller value (here, the TTI may be referred to as a first TTI, for example, 2 ms), it may be determined that the user meets the TTI adjusting requirement; if the current TTI of the user is a larger value (here, the TTI may be referred to as a second TTI, for example, 10 ms), the current TTI may remain unchanged.

Alternatively, if the current system resource is not limited or the utilization ratio of the current system resource is lower than a certain threshold, and when the current TTI of the user is the second TTI, it may be considered that the user meets the TTI adjusting requirement; while when the current TTI of the user is the first TTI, the current TTI may remain unchanged.

S103: Perform TTI adjustment on all or a part of the users meeting the TTI adjusting requirement.

For example, when the current system resource is limited, if the current TTI of the user is the first TTI, the TTI may be adjusted into the second TTI; or if the current system resource is not limited or the utilization ratio of the current system resource is lower than a certain threshold, and the current TTI of the user is the second TTI, the TTI may be adjusted into the first TTI.

It should be noted that, in the specific implementation of the present invention, the value of the TTI is not limited to 2 ms or 10 ms, and may also be other values.

In addition, in this embodiment, the TTIs of all the users meeting the TTI adjusting requirement may be adjusted, or the TTIs of only a part of the users may be adjusted according to a certain requirement; or after all the users meeting the TTI adjusting requirement are determined, a part of the users may be randomly selected for adjustment.

It can be seen that, through the method of the embodiment of the present invention, a TTI adjusting manner is determined according to the current use condition of the system resource and the current TTI of the user, so that a dynamic balance is achieved between the quality of service (Quality of Service, the abbreviation is QoS) of the user and the cell capacity.

Further, in the specific implementation of the present invention, the users may be differentiated according to the priorities of the users, so as to perform TTI adjustment on the users with a low priority. As shown in FIG. 2, another embodiment of the present invention provides a TTI adjusting method, which may include the following steps.

S201: Obtain use condition of a system resource.

Reference can be made to the description in S101 for the specific implementation of this step, and the details are not described repeatedly herein again.

S202: Judge whether a user meets a TTI adjusting requirement according to a current TTI of the user and the obtained use condition of the system resource.

Reference can be made to the description in S102 for how to judge whether the user meets the TTI adjusting requirement, and the details are not described repeatedly herein again. When the user meets the TTI adjusting requirement, it may be further determined whether TTI adjustment is required, that is, whether S203 needs to be performed, according to the priority of the user.

S203: Perform TTI adjustment on the users with a low priority.

Specifically, the users may be divided into gold users, silver users and bronze users according to the priorities of the users, and in the embodiment of the present invention, it may be determined, according to the priority of the user, whether the TTI of a user needs to be adjusted. For example, the TTI adjustment may be performed on the users with a low priority only, thereby further ensuring the transmission rate of the users with a high priority. Here, the users with the low priority may include bronze users only or include bronze users and the silver users.

In this step, after all the users meeting the TTI adjusting requirement are determined, the users are sorted according to the priorities, and assuming that the users with a low priority are arranged in the front, a certain percentage of the users in the front may be selected for the TTI adjustment.

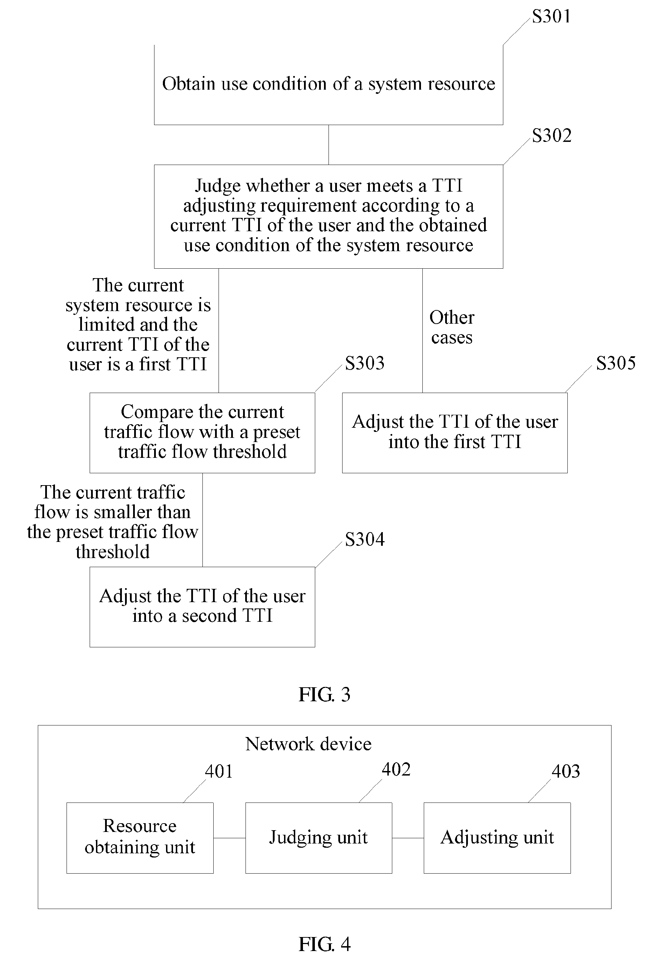

In addition, when the system resource is taken into consideration, the current traffic flow may also be considered to judge whether the user meets the TTI adjusting requirement. As shown in FIG. 3, still another embodiment of the present invention provides a TTI adjusting method, which may include the following steps.

S301: Obtain use condition of a system resource.

In this step, reference can be made to the description in S101 for the specific implementation of obtaining the use condition of the system resource, and the details are not described repeatedly herein again.

S302: Judge whether a user meets a TTI adjusting requirement according to a current TTI of the user and the obtained use condition of the system resource.

Reference can be made to S102 for this step, and the details are not described repeatedly herein again. If the TTI adjusting requirement is met, the subsequent steps are performed.

When it is judged that the user meets the TTI adjusting requirement in S302, in the case that a current system resource is limited and the current TTI of the user is a first TTI, it is further required to judge whether the TTI of the user needs to be adjusted according to the current traffic flow, thus S303 is performed; in other cases, S305 is performed.

S303: Compare the current traffic flow with a preset traffic flow threshold.

The current traffic flow may be represented by traffic volume correctly received in unit time. For example, if a measurement period is preset, and traffic volume correctly received in the measurement period is obtained, the current traffic flow may be represented by dividing the traffic volume correctly received in the measurement period by the preset measurement period: the current traffic flow=the traffic volume correctly received in the measurement period/the measurement period.

It should be noted that, the step of obtaining the traffic flow is not necessarily performed only in the case that the current system resource is limited and the current TTI of the user is the first TTI, and in the service implementation process, the traffic flow may be continuously monitored.

If the current traffic flow is smaller than the preset traffic flow threshold, S304 is performed, and the flow is ended.

S304: Adjust the TTI of the user into a second TTI.

For example, the TTI of the user is adjusted from 2 ms currently to 10 ms.

S305: Adjust the TTI of the user into the first TTI.

For example, the TTI of the user is adjusted from 10 ms currently to 2 ms.

It should be noted that, if the current traffic flow is greater than the preset traffic flow threshold, and the current TTI of the user is the second TTI, it may be not required to consider the use condition of the system resource, and when the current TTI of the user is the second TTI, the current TTI is adjusted into the first TTI.

In addition, in the TTI adjusting method according to this embodiment, the users may also be differentiated according to the priorities of the users, and the specific process is similar to the manner in the above embodiment, which is not described in detail herein again.

In the TTI adjusting method according to the embodiment of the present invention, the TTI is dynamically adjusted according to the current use condition of the system resource and the traffic flow, so that a dynamic balance is achieved between the QoS of the user and the cell capacity, and therefore, the TTI not only meets the data transmission requirement, but also improves the utilization ratio of channel resources as much as possible.

An embodiment of the present invention further provides a network device, and as shown in FIG. 4, the network device may include:
A resource obtaining unit 401, which is configured to obtain use condition of a system resource.

Here, reference can be made to the description in the method embodiment for the manner of obtaining the use condition of the system resource by the resource obtaining unit 401, and the details are not described repeatedly herein again.

A judging unit 402, which is configured to judge whether a user meets a TTI adjusting requirement according to a current TTI of the user and the use condition of the system resource obtained by the resource obtaining unit 401.

Here, reference can be made to the description in the method embodiment for the manner of judging whether the user meets the TTI adjusting requirement by the judging unit 402, and the details are not described repeatedly herein again.

An adjusting unit 403, which is configured to perform TTI adjustment on the user meeting the TTI adjusting requirement at least according to a judgment result of the judging unit 402.

For example, when the current system resource is limited, if the current TTI of the user is 2 ms, the TTI may be adjusted into 10 ms; and when the current system resource is not limited or a utilization ratio of the current system resource is lower than a certain threshold, the TTI may be switched back to 2 ms.

Through the network device provided by the embodiment of the present invention, a TTI adjusting manner is determined according to the current use condition of the system resource and the current TTI of the user, so that a dynamic balance is achieved between the QoS of the user and the cell capacity.

The network device provided by the embodiment of the present invention may adjust the TTIs of all the users meeting the TTI adjusting requirement, or adjust the TTIs of only a part of the users through random selection.

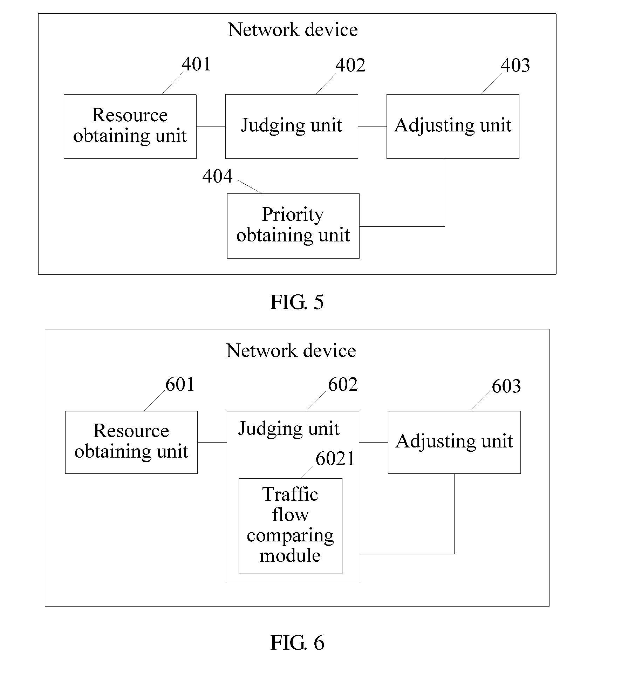

Further, in the specific implementation of the present invention, when the TTIs of the users meeting the TTI adjusting requirement are to be adjusted, the users may be differentiated according to the priorities of the users, and as shown in FIG. 5, the network device may further include:
A priority obtaining unit 404, which is configured to obtain priority information of the users, where the users may be divided into gold users, silver users and bronze users according to different priorities. According to the priority information of the users obtained by the priority obtaining unit 404, the adjusting unit 403 may perform the TTI adjustment on the users that are with a low priority and meet the TTI adjusting requirement.

In addition, when the system resource is taken into consideration, it may be judged whether the user meets the TTI adjusting requirement according to the current traffic flow. As shown in FIG. 6, another embodiment of the present invention provides a network device, which includes: a resource obtaining unit 601, a judging unit 602, and an adjusting unit 603.

The resource obtaining unit 601 is configured to obtain use condition of system resource.

The judging unit 602 is configured to judge whether a user meets a TTI adjusting requirement according to a current TTI of the user and the use condition of the system resource obtained by the resource obtaining unit 601.

When the current system resource is limited, and the current TTI of the user is a first TTI, it is further required to determine, according to the current traffic flow, whether the TTI of the user needs to be adjusted, and therefore, the judging unit may further include:
A traffic flow comparing module 6021, which is configured to compare a current traffic flow with a preset traffic flow threshold.

When the current system resource is limited and the current TTI of the user is the first TTI, if the current traffic flow is smaller than the preset traffic flow threshold, the judging unit judges that the user meets the TTI adjusting requirement.

The adjusting unit 603 is configured to perform TTI adjustment on the user according to a result of the judging unit.

For example, when the current system resource is limited, and the current TTI of the user is 2 ms, if the current traffic flow is smaller than the preset traffic flow threshold, the TTI may be adjusted into 10 ms; and when the current system resource is not limited or the utilization ratio of the current system resource is lower than a certain threshold, the TTI may be switched back to 2 ms.

It should be noted that, in this embodiment, the TTI adjustment may also be performed according to the priorities of the users or by randomly selecting a part of the users meeting the adjusting requirement.

In the network device according to the embodiment of the present invention, the TTI is dynamically adjusted according to the current use condition of the system resource and the traffic flow, so that a dynamic balance is achieved between the QoS of the user and the cell capacity, and therefore, the TTI not only meets the data transmission requirement, but also improves the utilization ratio of channel resources as much as possible.

It should be noted that, the network device in the specific implementation of the present invention may be a base station or a radio network controller, that is to say, the base station or the radio network controller may be used to monitor the use condition of the system resource and/or the traffic flow, so as to adjust the TTI of the user according to the use condition of the system resource (or the use condition of the system resource and the traffic flow).

Persons of ordinary skill in the art should understand that the process of adjusting the TTI operation mode in the above embodiments may be implemented by a program instructing relevant hardware. The program may be stored in a readable storage medium. When the program run, the corresponding steps of the above method are performed. The storage medium may be a Read-Only Memory/Random Access Memory (ROM/RAM), a magnetic disk, or an optical disk.

Apparently, various modifications and variations can be made to the embodiments of the present invention without departing from the spirit and scope of the present invention by persons skilled in the art. In this way, if the modifications and variations made to the present invention are within the scope of the claims of the present invention and the equivalent techniques, the present invention is intended to include the modifications and variations.

## Claims

1. A transmission timing interval, TTI,adjusting method, comprising:
obtaining use condition of a system resource;
judging whether a user meets a TTI adjusting requirement according to a current TTI of the user and the obtained use condition of the system resource; and
performing TTI adjustment on all or a part of users meeting the TTI adjusting requirement.

2. The method according to claim 1, wherein the judging whether the user meets the TTI adjusting requirement according to the current TTI of the user and the obtained use condition of the system resource comprises:
judging whether a current system resource is limited according to the obtained use condition of the system resource, and when the current system resource is limited and the current TTI of the user is a first TTI, judging that the user meets the TTI adjusting requirement; or
judging whether the current system resource is limited according to the obtained use condition of the system resource, and when the current system resource is not limited or a utilization ratio of the current system resource is lower than a certain threshold, and the current TTI of the user is a second TTI, judging that the user meets the TTI adjusting requirement;
wherein the first TTI is smaller than the second TTI.

3. The method according to claim 2, wherein the performing the TTI adjustment on all or a part of the users meeting the TTI adjusting requirement comprises:
when the current system resource is limited and the current TTI of the user is the first TTI, adjusting the TTI of the user into the second TTI; or
when the current system resource is not limited or the utilization ratio of the current system resource is lower than the certain threshold, and the current TTI of the user is the second TTI, adjusting the TTI of the user into the first TTI.

4. The method according to claim 2, wherein the judging whether the current system resource is limited according to the obtained use condition of the system resource comprises:
when one or more types of resources in the system resource are limited, judging that the current system resource is limited; or
when another user needs to use the system resource, while the system fails to provide the system resource, judging that the current system resource is limited.

5. The method according to claim 4, wherein whether a certain resource in the system resource is limited is judged in the following manner:
when a utilization ratio of the certain resource is greater than or equal to a corresponding preset utilization ratio threshold, judging that the certain resource is limited; or
when a current load of the certain resource is greater than or equal to a corresponding preset load threshold, judging that the certain resource is limited.

6. The method according to any one of claims 1 to 5, wherein the system resource at least comprises one of the following: an air interface load resource, a channel element resource, and an Iub resource.

7. The method according to any one of claims 1 to 5, wherein if the current system resource is limited and the current TTI of the user is the first TTI, the judging whether the user meets the TTI adjusting requirement according to the current TTI of the user and the obtained use condition of the system resource further comprises:
comparing a current traffic flow with a preset traffic flow threshold; and
if the current traffic flow is smaller than the preset traffic flow threshold, judging that the user meets the TTI adjusting requirement;
wherein the current traffic flow is traffic volume correctly received in unit time.

8. The method according to claim 1 or 7, wherein the performing the TTI adjustment on all or a part of the users meeting the TTI adjusting requirement comprises: performing the TTI adjustment on users that are with a low priority and meet the TTI adjusting requirement.

9. The method according to claim 8, wherein the users with the low priority comprise bronze users; or
the users with the low priority comprise bronze users and silver users.

10. The method according to any one of claims 2 to 9, wherein the first TTI is 2 ms, and the second TTI is 10 ms.

11. A network device, comprising:
a resource obtaining unit, configured to obtain use condition of a system resource;
a judging unit, configured to judge whether a user meets transmission timing interval, TTI,adjusting requirement according to a current TTI of the user and the use condition of the system resource obtained by the resource obtaining unit; and
an adjusting unit, configured to perform TTI adjustment on the users meeting the TTI adjusting requirement at least according to a result of the judging unit.

12. The network device according to claim 11, wherein the judging unit is further configured to judge whether a current system resource is limited according to the obtained use condition of the system resource, and when the current system resource is limited and the current TTI of the user is a first TTI, judge that the user meets the TTI adjusting requirement; or
the judging unit is further configured to judge whether the current system resource is limited according to the obtained use condition of the system resource, and when the current system resource is not limited or a utilization ratio of the current system resource is lower than a certain threshold, and the current TTI of the user is a second TTI, judge that the user meets the TTI adjusting requirement;
wherein the first TTI is smaller than the second TTI.

13. The network device according to claim 12, wherein when the current system resource is limited and the current TTI of the user is the first TTI, the adjusting unit adjusts the TTI of the user into the second TTI; and/or
when the current system resource is not limited or the utilization ratio of the current system resource is lower than the certain threshold, and the current TTI of the user is the second TTI, the adjusting unit adjusts the TTI of the user into the first TTI.

14. The network device according to claim 12, wherein the judging unit is further configured to judge that the current system resource is limited when one or more types of resources in the system resource are limited; or
the judging unit is further configured to judge that the current system resource is limited when another user needs to use the system resource, while the system fails to provide the system resource.

15. The network device according to claim 14, wherein the judging unit is further configured to judge that a certain resource is limited when a utilization ratio of the certain resource is greater than or equal to a corresponding preset utilization ratio threshold; or
the judging unit is further configured to judge that the certain resource is limited when a current load of the certain resource is greater than or equal to a corresponding preset load threshold.

16. The network device according to any one of claims 11 to 15, wherein the judging unit comprises a traffic flow comparing module, and if the current system resource is limited and the current TTI of the user is the first TTI,
the traffic flow comparing module is configured to compare a current traffic flow with a preset traffic flow threshold; and
if the current traffic flow is smaller than the preset traffic flow threshold, the judging unit judges that the user meets the TTI adjusting requirement.

17. The network device according to claim 11 or 16, further comprising:
a priority obtaining unit, configured to obtain priority information of the user;
wherein the adjusting unit performs the TTI adjustment on the user according to the result of the judging unit and the priority information obtained by the priority obtaining unit.

18. The network device according to any one of claims 11 to 17, wherein the network device is a base station or a radio network controller.

19. The network device according to any one of claims 11 to 18, wherein the first TTI is 2 ms, and the second TTI is 10 ms.
